# EUROPÄISCHE PATENTSCHRIFT

(11) **EP 0 557 766 B1**
(45) Veröffentlichungstag und Bekanntmachung des Hinweises auf die Patenterteilung: **19.06.1996**
(21) Anmeldenummer: 93101890.7
(22) Anmeldetag: 06.02.1993
(51) Int. Cl.: B62D 1/18

(54) **Verstellantrieb für axialverstellbare Lenksäulen in Kraftfahrzeugen**
Adjusting drive for an axially adjustable steering column in motor vehicle
Commande pour un réglage axial d'une colonne de direction dans un véhicule

(30) Priorität: 28.02.1992 DE 4206176
(43) Veröffentlichungstag der Anmeldung: 01.09.1993
(73) Patentinhaber: LEMFOERDER METALLWAREN AG., D-49441 Lemförde (DE)
(72) Erfinder: Vortmeyer, Jens, Dipl.-Ing., W-4994 Preus.-Oldendorf (DE)
(74) Vertreter: Bruse, Willy Hans Heinrich

(56) Entgegenhaltungen:
- DE-C- 3 318 935
- DE-C- 3 618 266
- DE-C- 3 914 608

## Beschreibung

Die Erfindung betrifft einen Verstellantrieb einer axial verstellbaren Lenksäule in einem Kraftfahrzeug nach dem Oberbegriff des Patentanspruches 1.

Ein solcher Verstellantrieb ist aus der DE 33 18 935 -C1-bekannt. Das Getriebe zur Kupplung des elektromotorisch antreibbaren Antriebsorgans mit dem Mantelrohr weist ein metallisches Schneckenrad auf, welches in eine globoide Verzahnung an dem ebenfalls metallischen Mantelrohr eingreift, so daß das Mantelrohr durch einen in der Drehrichtung umkehrbaren Elektromotor in beiden Achsrichtungen gegenüber dem Gehäuse verstellbar ist. Ein solches Getriebe ist selbstsperrend und vermeidet daher zusätzliche Rastelemente zur Fixierung der eingestellten Position. Zur Minimierung des Zahnspiels und des Getriebespiels an sich ist das Schneckenrad um eine zur Längsachse der Verzahnung am Mantelrohr parallel verlaufende Welle schwenkbar gelagert und gegen die Verzahnung am Mantelrohr durch eine Feder belastet. Anstelle einer solchen Feder kann auch eine handbetätigte Exzenternachstellvorrichtung verwendet werden.

Verstellantriebe herkömmlicher Bauart bedingen eine unerwünschte Gewichtsvergrößerung mit den sich daraus besonders bei einem Frontaufprall des Fahrzeugs ergebenden nachteiligen Folgen.

Es ist Aufgabe der Erfindung, einen Verstellantrieb der eingangs genannten Gattung hinsichtlich der Aufnahme axial wirksamer Kräfte zu verbessern und dadurch die Herstellung einer dauerhaft spielfreien Getriebekupplung aus Kunststoffteilen zwischen dem Antrieb und einem eventuell ebenfalls aus Kunststoff herzustellenden Mantelrohr zu ermöglichen.

Diese Aufgabe wird erfindungsgemäß mit Ausbildungsmerkmalen nach dem Kennzeichen des Patentanspruches 1 gelöst.

Durch die Verwendung einer Zykloidenverzahnung kann ein Zahneingriff mit beliebig vielen Zähnen erfolgen, wobei die Verwendung von zwei Zahnstangen es ermöglicht, daß die Verzahnung einer Zahnstange auf ganzer Länge voll im Eingriff ist, selbst wenn die andere Zahnstange aus der Verzahnung am Mantelrohr herausgehoben ist. Die Umsetzung der Drehbewegung des Antriebsorgans in die Translationsbewegung zur axialen Verstellung des Mantelrohres erfolgt durch eine Exzenterlagerung, bei der die beiden Zahnstangen um 180° zueinander phasenversetzt auf einer exzentrischen Bahn beweglich sind. Bei der Übertragung der Verstellkräfte und ebenso bei der Übertragung von Axialkräften, die bei einem Frontaufprall des Fahrzeugs wirksam werden, erfolgt eine Belastung beider Zahnstangen lediglich in Längsrichtung, wodurch die Kraftübertragung wesentlich optimiert wird. Dies ermöglicht die Herstellung sämtlicher Bauteile aus einem nichtmetallischen, unelastischen Werkstoff mit einem gegenüber Metall geringeren spezifischen Gewicht, insbesondere die Herstellung aus Kunststoff. Es ergibt sich daraus eine erhebliche Gewichtsreduzierung der Lenksäule im Bereich ihres Oberendes und eine Verringerung der aufzuwendenden Verstellkräfte, so daß auch motorische Antriebseinrichtungen entsprechend kleiner ausgelegt werden können und zu einer weiteren Gewichtsverringerung beitragen. Alle Bauteile sind einfach in der Herstellung und können beispielsweise aus geeigneten Kunststoffen gespritzt werden. Die Leichtgängigkeit kann durch die Wahl geeigneter Kunststoffe gefördert werden.

Ein ganz erheblicher Vorteil ist darin zu sehen, daß das wellenförmige Antriebsorgan nicht mehr unbedingt mit der Welle eines Elektromotors starr gekoppelt sein muß, so daß diese Verbindung gegebenenfalls aus einer biegsamen Welle oder dergleichen besteht und der Elektromotor an entfernter Stelle im Kraftfahrzeug befestigt werden kann, wie es beispielsweise aus der DE 36 18 266 -C1- prinzipiell bekannt ist.

Auf der Zeichnung ist ein Ausführungsbeispiel der Erfindung dargestellt. Es zeigen:

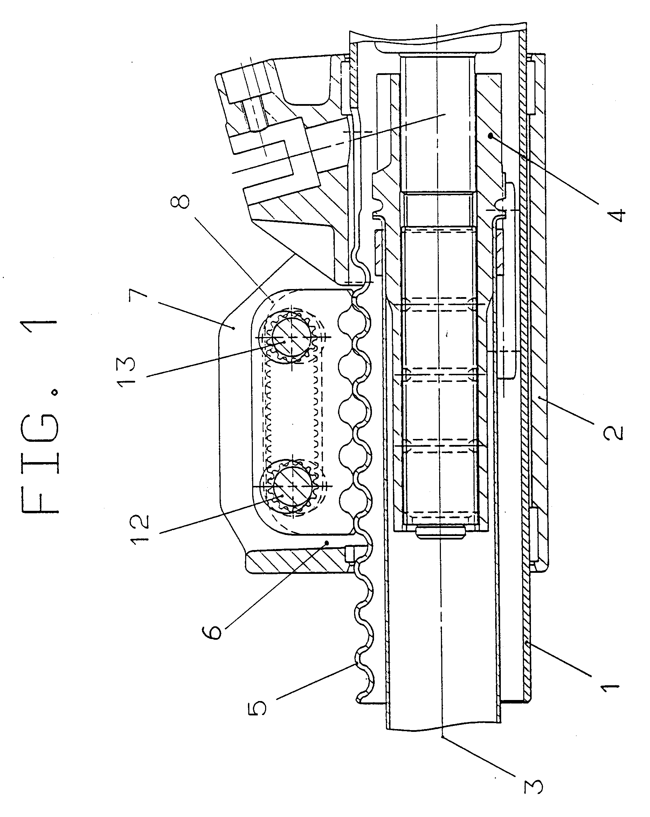

- Figur 1: einen Längsschnitt durch einen Verstellantrieb in einer Achsebene und
- Figur 2: die Teile des Verstellantriebes in einer Explosionsdarstellung.

Das Mantelrohr 1 ist in einem an der Karosserie festen Gehäuse 2 in Richtung seiner Längsachse 3 verschiebbar angeordnet. Innerhalb des Mantelrohres 1 ist das obere Teil der teleskopierbar ausgeführten Lenkwelle 4 drehbar gelagert, so daß es zusammen mit dem Mantelrohr 1 in axialer Richtung verstellbar ist. Am oberen Ende der Lenkwelle 4 ist das auf der Zeichnung nicht dargestellte Lenkrad des Kraftfahrzeuges befestigt.

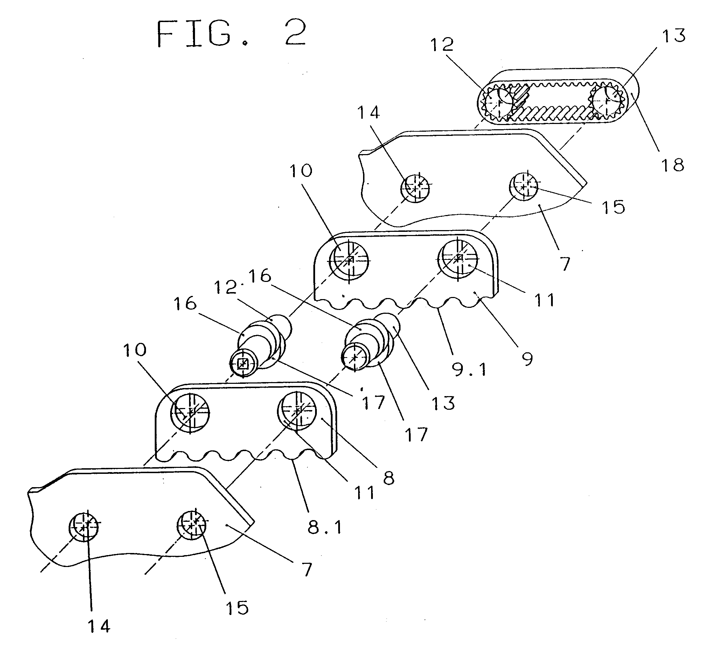

Für den Verstellantrieb ist am Außenumfang des Mantelrohres 1 wenigstens in einem der Verstellänge entsprechenden Bereich eine sich in Richtung der Längsachse 3 erstreckende Zykloidenverzahnung 5 ausgebildet. Diese Verzahnung 5 kann in Anpassung an den Werkstoff des Mantelrohres 1 gefräst, geprägt, bei der Herstellung gespritzt oder in anderer geeigneter Weise ausgeformt sein. In einer vor dieser Verzahnung 5 liegenden Gehäuseausnehmung 6 sind zwischen zwei zueinander parallelen Wandungen 7 des Gehäuses 2 parallel zueinander und parallel zur Verzahnung 5 am Mantelrohr 1 zwei Zahnstangen 8 und 9 angeordnet, an denen ebenfalls eine Zykloidenverzahnung 8.1, 9.1 ausgebildet ist, die mit einem einer halben Zahnteilung entsprechenden Phasenversatz in die Zahnteilung 5 am Mantelrohr 1 eingreifen. Daraus ergibt sich eine gewöhnliche oder gemeine Zykloidenverzahnung. Beide Zahnstangen 8 und 9 weisen jeweils auf gleicher Höhe zwei Durchgangsbohrungen 10 und 11 auf und sind exzentrisch auf einer durchgehenden Welle 12 bzw. 13 gelagert, wobei diese Wellen 12 und 13 andererseits in Bohrungen 14 und 15 der die Ausnehmung 6 im Gehäuse begrenzenden Wandung 7 drehbar gelagert sind. Die Exzenterlagerung wird durch zwei mit einem Phasenversatz von 180° auf jeder Welle 12 bzw. 13 ausgebildeten Exzentern 16 und 17 gebildet, die sich innerhalb der Bohrungen 10 und 11 beider Zahnstangen 8 und 9 drehen. Die beiden phasengleich angeordneten Exzenter 16 bewegen sich in den Bohrungen 10 und 11 der einen Zahnstange 8 und die beiden dazu um 180° phasenversetzen Exzenter 17 in den Bohrungen 10 und 11 der Zahnstange 9. Beide Wellen 12 und 13 sind durch einen Zahnriemen 18 miteinander verbunden und bilden somit ein gemeinsames Antriebsorgan für den Verstellantrieb, so daß nur eine Welle 12 oder 13 von Hand oder mittels eines Antriebsmotors zu betätigen ist. Alle in Figur 2 dargestellten Bauteile können aus einem geeigneten Kunststoff kostengünstig hergestellt sein. Zur Längenverstellung des Mantelrohres 1 in dem Gehäuse 2 erfolgt eine Verdrehung des Antriebsorgans in der einen oder anderen Richtung, so daß sich auch die Zahnstangen 8 und 9 mit einem Phasenversatz von 180° ihrer Zahnteilung auf einer exzentrischen Bahn bewegen, so daß infolge der gewählten Zykloidenverzahnung stets ein Zahnflankenkontakt bei der Bewegung der Zahnstangen 8 und 9 über deren gesamte Länge erhalten bleibt und die sich in Richtung der Längsachse 3 maximal wirksamen Axialkräfte gleichmäßig auf alle Zähne wenigstens einer Zahnstange 8 bzw. 9 verteilt.

### BEZUGSZEICHENLISTE:

- 1: Mantelrohr
- 2: Gehäuse
- 3: Längsachse
- 4: Lenkwelle
- 5: Zykloidenverzahnung
- 6: Ausnehmung
- 7: Wandung
- 8: Zahnstange
- 9: Zahnstange
- 10: Bohrung
- 11: Bohrung
- 12: Welle
- 13: Welle
- 14: Bohrung
- 15: Bohrung
- 16: Exzenter
- 17: Exzenter
- 18: Zahnriemen

## Patentansprüche

1. Verstellantrieb einer axial verstellbaren Lenksäule in einem Kraftfahrzeug, bei dem ein Getriebe zwischen einem drehbar in einem an der Karosserie festen Gehäuse (2) gelagerten Antriebsorgan (12,13) und einem in dem Gehäuse (2) axial verschiebbar gelagerten Mantelrohr (1) angeordnet ist, welches eine sich in dessen Achsrichtung erstreckende Verzahnung (5) aufweist, in die eine Verzahnung (8.1,9.1) des Getriebes eingreift, wobei in dem Mantelrohr (1) das obere Teil einer teleskopierbaren, an seinem oberen Ende mit dem Lenkrad verbundenen Lenkwelle (4) drehbar gelagert ist, dadurch gekennzeichnet, daß das Getriebe eine Zykloidenverzahnung (5) und zwei Zahnstangen (8,9) aufweist, deren Verzahnung (8.1,9.1) um eine halbe Zahnteilung zueinander phasenversetzt in die Verzahnung (5) am Mantelrohr (1) eingreift und die mittels einer Exzenterlagerung (16,17) um 180° phasenversetzt durch das Antriebsorgan exzentrisch beweglich sind.

2. Verstellantrieb nach Anspruch 1, dadurch gekennzeichnet, daß die Zahnstangen (8,9) parallel nebeneinander auf zueinander um 180° phasenversetzt angeordneten Exzentern (16,17) einer Antriebswelle (12,13) gelagert sind.

3. Verstellantrieb nach den Ansprüchen 1 und 2, dadurch gekennzeichnet, daß die Zahnstangen (8,9) zweifach auf Exzenter zweier synchron angetriebener Antriebswellen (12,13) gelagert sind.

4. Verstellantrieb nach den Ansprüchen 1 bis 3, dadurch gekennnzeichnet, daß die beiden Antriebswellen (12,13) durch eine formschlüssige Getriebekupplung (18) miteinander verbunden sind und ein gemeinsames Antriebsorgan aufweisen.

## Claims

1. Adjustable drive for an axially adjustable steering column in a motor vehicle in which a gear is arranged between a driving member (12, 13) mounted rotatably in a housing (2) fixed on the vehicle body and a casing tube (1) mounted axially displaceably in the housing (2), comprising teeth (5) which extend in the axial direction thereof and in which gear teeth (8.1, 9.1) engage, wherein the upper part of a telescopic steering shaft (4) connected to the steering wheel at its upper end is rotatably mounted in the casing tube (1), characterized in that the gear has cycloid teeth (5) and two toothed racks (8, 9) of which the teeth (8.1, 9.1) are mutually phase-shifted by half a tooth pitch and engage in the teeth (5) on the casing tube (1), the toothed racks (8, 9) being phase-shifted by 180° by an eccentric bearing (16, 17) and being eccentrically movable by the driving member.

2. Adjustable drive according to Claim 1, characterized in that the toothed racks (8, 9) are mounted next to one another in parallel on cams (16, 17) of a driving shaft (12, 13) which are arranged so as to be mutually phase-shifted by 180°.

3. Adjustable drive according to Claims 1 and 2, characterized in that the toothed racks (8, 9) are mounted doubly on cams of two synchronously driven driving shafts (12, 13).

4. Adjustable drive according to Claims 1 to 3, characterized in that the two driving shafts (12, 13) are connected to one another by a positive gear coupling (18) and have a common driving member.

## Revendications

1. Dispositif d'entraînement de réglage d'une colonne de direction réglable axialement dans un véhicule automobile, dans lequel un mécanisme est disposé entre un organe d'entraînement (12,13) monté de manière à pouvoir tourner dans un boîtier (2) fixé à la carrosserie, et un tube enveloppe (1) monté de manière à être déplaçable axialement dans le boîtier (2) et qui possède une denture (5) qui s'étend dans la direction axiale du tube et dans laquelle s'engage une denture (8.1, 9.1) du mécanisme, et dans lequel la partie supérieure d'un arbre télescopique de direction (4), dont l'extrémité supérieure est reliée au volant, est montée de manière à pouvoir tourner dans le tube enveloppe (1), caractérisé en ce que le mécanisme possède une denture cycloïdale (5) et deux crémaillères (8, 9), dont les dentures (8.1, 9.1) engrènent, en étant déphasées réciproquement d'un demi-pas des dents, dans la denture (5) située sur le tube enveloppe (1) et qui sont déplaçables par l'organe d'entraînement d'une, manière excentrée avec un déphasage de 180°, au moyen d'un support à excentriques (16,17).

2. Dispositif d'entraînement de réglage selon la revendication 1, caractérisé en ce que les crémaillères (8, 9) sont montées parallèlement côte-à-côte sur des excentriques (16,17), qui sont déphasés réciproquement de 180°, d'un arbre d'entraînement (12,13).

3. Dispositif d'entraînement de réglage selon les revendications 1 et 2, caractérisé en ce que les crémaillères (8,9) sont supportées doublement sur des excentriques de deux arbres d'entraînement (12,13) entraînés de façon synchrone.

4. Dispositif d'entraînement de réglage selon la revendication 1 à 3, caractérisé en ce que les deux arbres d'entraînement (12,13) sont reliés entre eux par un accouplement de transmission réalisant une liaison par formes complémentaires et possèdent un organe d'entraînement commun.
